# EUROPÄISCHE PATENTSCHRIFT

(11) **EP 1 255 969 B1**
(45) Veröffentlichungstag und Bekanntmachung des Hinweises auf die Patenterteilung: **03.11.2010**
(21) Anmeldenummer: 01919272.3
(22) Anmeldetag: 09.02.2001
(51) Int. Cl.: G01F 23/26

(54) **VORRICHTUNG ZUR BESTIMMUNG DES FÜLLSTANDES EINES MEDIUMS IN EINEM BEHÄLTER**
DEVICE FOR DETERMINING THE LEVEL OF A MEDIUM IN A CONTAINER
DISPOSITIF PERMETTANT DE DETERMINER LE NIVEAU DE REMPLISSAGE D'UN AGENT DANS UN CONTENANT

(30) Priorität: 17.02.2000 DE 10007188
(43) Veröffentlichungstag der Anmeldung: 13.11.2002
(73) Patentinhaber: Endress u. Hauser GmbH u.Co. KG, 79689 Maulburg (DE)
(72) Erfinder: FLORENZ, Hans-Jörg, 79689 Maulburg (DE); WERNET, Armin, 79618 Rheinfelden (DE)
(74) Vertreter: Andres, Angelika Maria
(86) Internationale Anmeldenummer: PCT/EP2001/001439
(87) Internationale Veröffentlichungsnummer: WO 2001/061286

(56) Entgegenhaltungen:
- DE-A- 19 536 199
- FR-A- 1 002 740
- US-A- 3 199 350
- US-A- 5 602 333

## Beschreibung

Die Erfindung bezieht sich auf eine Vorrichtung zur Bestimmung des Füllstandes eines Mediums in einem Behälter mittels einer kapazitiven Sonde, wobei eine Spannungsquelle vorgesehen ist, die die Sonde mit einer Meßfrequenz beaufschlagt, und wobei eine Meß-/Auswerteschaltung vorgesehen ist, die die Meßkapazität ermittelt und mit einem vorgegebenen Kapazitätswert vergleicht und die Information über den Füllstand des Mediums in dem Behälter bereitstellt.

Bei kapazitiven Verfahren zur Bestimmung des Füllstandes eines Füllguts in einem Behälter bilden kapazitive Sonde und Behälterwand die Elektroden eines Kondensators. Falls die Behälterwand nicht leitfähig ist, muß eine separate zweite Elektrode innerhalb oder außerhalb des Behälters vorgesehen sein. Zwischen den beiden Elektroden befindet sich - je nach Füllstand des Mediums in dem Behälter - entweder Luft oder Medium, was sich aufgrund der unterschiedlichen Dielektrizitätskonstanten beider Substanzen in einer Änderung der Meßkapazität niederschlägt. Weiterhin ist die Meßkapazität natürlich auch abhängig von dem jeweiligen Füllstand des Mediums in dem Behälter, da beide Größen 'Füllstand' und 'Meßkapazität' funktional voneinander abhängen. Kapazitive Sonden lassen sich daher sowohl bei der Grenzstanddetektion als auch bei einer kontinuierliche Füllstandsbestimmung einsetzen.

Aus der DE 195 36 199 C2 ist eine kapazitive Füllstandssonde bekannt geworden, die auf der Höhe des zu überwachenden Füllstandes montiert ist. Es handelt sich also um einen Grenzstanddetektor bzw. einen Grenzschalter. Grenzschalter werden bevorzugt als Überlaufsicherungen in Behältern oder als Leerlaufsicherungen vor Pumpen montiert. Ist die kapazitive Sonde von dem jeweils zu detektierenden Füllgut bedeckt, so hat sie einen größeren Kapazitätswert als im unbedeckten Zustand. Mittels einer Kapazitätsmeßschaltung und einem Komparator wird der Kapazitätsmeßwert mit einem Schwellenwert verglichen; anhand des Ergebnisses ist klar erkennbar, wann der zu überwachende Füllstand erreicht ist.

Die Füllstandsmessung mittels kapazitiver Sonden ist insofern kritisch, als die zu bestimmenden und auszuwertenden Kapazitätswerte in der Größenordnung von 1 pF liegen. Bei kompakten Grenzschaltern liegen die relevanten Kapazitätswerte sogar unterhalb von 1 pF. Diese sehr kleinen Meßwerte werden in vielen Fällen noch durch äußere Störeinflüsse verfälscht. Bei den Störeinflüssen handelt es sich beispielsweise um elektromagnetische Störsignale, um Ansatzbildung an der Sonde oder um Temperatur- und Langzeitdriften der Meß-/Auswerteschaltung.

Weitere kapazitive Fullstandssonden sind aus US-A-5 602 333 und US-A-3 199 350 bekannt.

Der Erfindung liegt die Aufgabe zugrunde, die Meßempfindlichkeit einer kapazitiven Sonde zu erhöhen und gleichzeitig ihre Empfindlichkeit gegenüber Störsignalen zu erniedrigen.

Die Aufgabe wird dadurch gelöst, daß die Meß-/Auswerteschaltung zumindest eine Induktivität aufweist, die mit der Meßkapazität einen Serienresonanzschwingkreis bildet.

Gemäß einer vorteilhaften Weiterbildung der erfindungsgemäßen Vorrichtung handelt es sich bei der Sonde um einen Grenzstanddetektor bzw. um einen Grenzschalter. Selbstverständlich ist die Erfindung aber auch in Zusammenhang mit einer kontinuierlichen Füllstandsmessung verwendbar, wobei im Falle dieser Anwendung nachfolgend eine Linearisierung durchgeführt werden sollte. Bevorzugt - jedoch ohne eine entsprechende Einschränkung - handelt es sich bei der erfindungsgemäßen Vorrichtung um einen Kompaktsensor.

Die Ausgestaltung der erfindungsgemäßen Vorrichtung sieht einen Widerstand vor, der der Induktivität der Meß-/Auswerteschaltung parallel geschaltet ist. Dieser Widerstand dient der gezielten Bedämpfung des Serienresonanzschwingkreises.

Gemäß einer vorteilhaften Weiterbildung der erfindungsgemäßen Vorrichtung ist zusätzlich zur Meßkapazität ein zweiter Kondensator vorgesehen, dessen erster Anschluß an dem Knotenpunkt, an dem die Meßkapazität und die Induktivität verbunden sind, angeschlossen ist und dessen zweiter Anschluß zur internen Masse der Meß-/Auswerteschaltung geschaltet ist. Diese Kapazität dient der Arbeitspunkteinstellung der Meß-/Auswerteschaltung.

Insbesondere ist vorgesehen, daß der Widerstand und die Eigenresonanz der Induktivität so bemessen sind, daß Störfrequenzen weitgehend unterdrückt werden. Durch eine geschickte Auswahl der Induktivität läßt sich das EMV-Verhalten der Schaltung wesentlich verbessern. Weiterhin ist es vorteilhaft, wenn die Induktivität und die Kapazität des zweiten Kondensators so bemessen sind, daß Störfrequenzen weitgehend unterdrückt werden.

Gemäß einer bevorzugten Ausführungsform des erfindungsgemäßen Verfahrens ist der Serienresonanzschwingkreis derart abgestimmt, daß bei maximaler Meßkapazität die Meßfrequenz gleich der Resonanzfrequenz ist oder daß die Meßfrequenz kleiner als die Resonanzfrequenz ist. So erhält man bei unbedeckter Sonde bzw. bei der Überwachung des Füllstandes eines Mediums mit einer kleinen Dielektrizitätskonstanten bereits eine Verringerung der Gesamtimpedanz aus Meßkapazität und Induktivität und damit eine größere Empfindlichkeit. Da dies keine Auswirkungen auf die Meß-/Auswerteschaltung hat, bleibt die absolute Temperaturdrift gleich, während sich die relative Temperaturdrift verbessert. Einhergehend damit verringert sich die Empfindlichkeit der kapazitiven Sonde für Störeinflüsse.

Eine besonders vorteilhafte Ausgestaltung der erfindungsgemäßen Vorrichtung schlägt vor, die Bedämpfung des Serienresonanzschwingkreises über den Widerstand so zu wählen, daß Toleranzen der Eigenresonanz der Induktivität und/oder die Temperaturabhängigkeit der Induktivität unterdrückt werden.

Die Erfindung wird anhand der nachfolgenden Zeichnungen näher erläutert. Es zeigt:
Fig. 1: eine schematische Darstellung der erfindungsgemäßen Vorrichtung,
Fig. 2: ein Ersatzschaltbild der Meß-/Auswerteschaltung der erfindungsgemäßen Vorrichtung,
Fig. 3: eine graphische Darstellung des Frequenzverhaltens der Meß-/Auswerteschaltung nach dem Stand der Technik und
Fig. 4: eine graphische Darstellung des Frequenzverhaltens der Meß-/Auswerteschaltung gemäß der erfindungsgemäßen Vorrichtung.

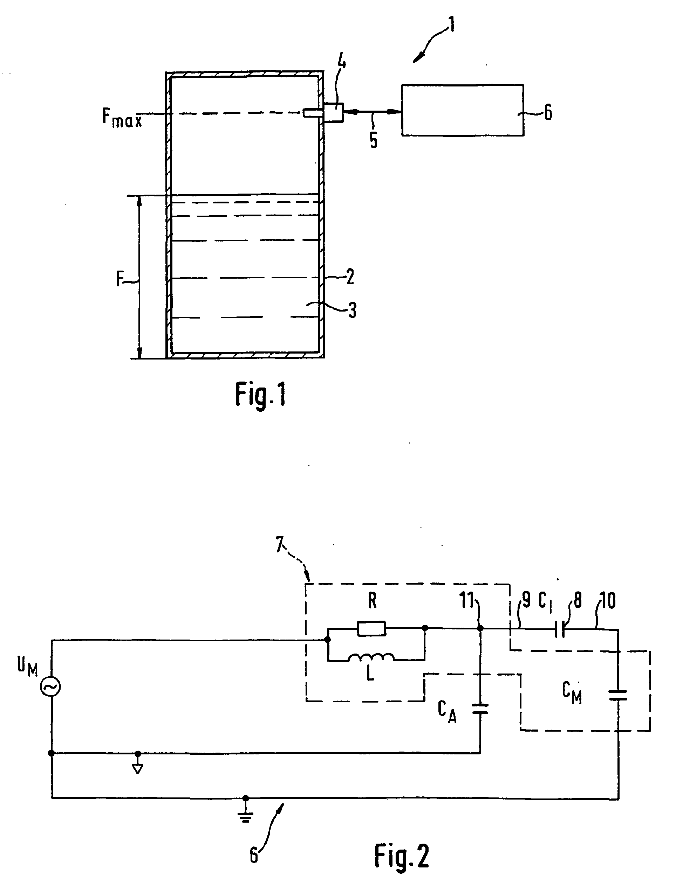

Fig. 1 zeigt eine schematische Darstellung der erfindungsgemäßen Vorrichtung 1. Die kapazitive Sonde 4 ist im oberen Bereich des Behälters 4 als Überfüllsicherung angeordnet, arbeitet also im gezeigten Fall als Grenzschalter. Die kapazitive Sonde 4 ermittelt die Meßspannung *U_{M}* bzw. den Meß- oder Scheinstrom *I_{M}*. Vorzugsweise arbeitet die erfindungsgemäße Vorrichtung 1 mit einer sinusförmigen Meßspannung *U_{M}* mit konstanter Meßfrequenz *f_{M}.* Meßspannung *U_{M}* bez. Meßstrom *I_{M}* ändern sich in Abhängigkeit von der Meßkapazität *C_{M}*, die - wie bereits mehrfach erwähnt - ein Maß für den Füllstand F des Mediums 3 in dem Behälter 2 ist. Über die Verbindungsleitung 5 ist die kapazitive Sonde 4 mit der Meß-/Auswerteschaltung 6 verbunden, wobei die Meß-/Auswerteschaltung 6 auch durchaus in der kapazitiven Sonde 4 angeordnet sein kann.

In Fig. 2 ist ein Ersatzschaltbild der Meß-/Auswerteschaltung 6 der erfindungsgemäßen Vorrichtung 1 dargestellt. In Serie zu der Meßkapazität *C_{M}* ist eine Induktivität L geschaltet. Der Induktivität L ist ein Widerstand R parallel geschaltet. Meßkapazität *C_{M}*, Induktivität L und Widerstand R bilden einen Serienresonanzschwingkreis 7. Jede reale Induktivität stellt - da sie stets von parasitären Kapazitäten begleitet wird - einen eigenen Parallelschwingkreis mit eigener Resonanzfrequenz bzw. mit eigenem Frequenzgang dar. Durch eine entsprechende Abstimmung dieses Resonanzkreises ist es daher möglich, unerwünschte Frequenzanteile des Störspektrums gezielt und weitgehend zu unterdrücken.

Der Widerstand R dient der gezielten Bedämpfung des Serienresonanzschwingkreises 7. Zwischen der aus Induktivität L und Widerstand R gebildeten Parallelschaltung und der Meßkapazität *C_{M}* befindet sich die lsolationskapazität *C_{I}* der kapazitiven Sonde 4, die durch den Kondensator 8 dargestellt ist. An dem Knotenpunkt 11 der Parallelschaltung von Induktivität L und Widerstand R ist eine weitere Kapazität *C_{A}* zur internen Masse der Sonde 4 geschaltet. Diese Kapazität *C_{A}* dient der Arbeitspunkteinstellung der Meß-/Auswerteschaltung 6. Die auszuwertende Umgebung der Sonde 4, also der Behälter 2, das Medium 3 und die Erde, wird in dem Ersatzschaltbild durch die Meßkapazität *C_{M}* und eine externe Rückleitung zur internen Masse der Sonde 4 dargestellt.

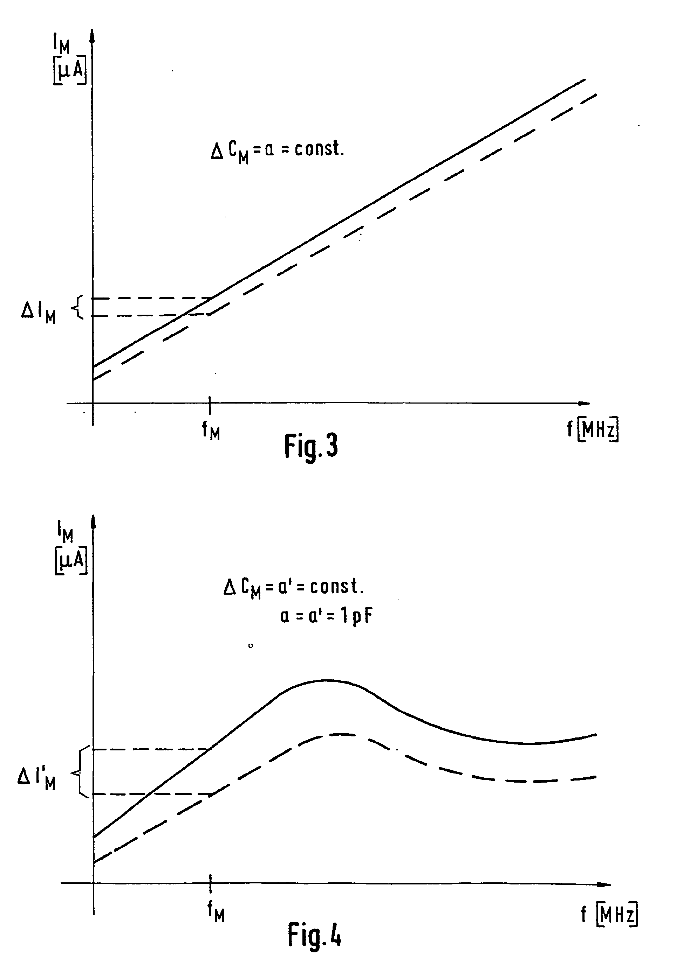

In Fig. 3 ist eine graphische Darstellung des Frequenzverhaltens der Meß-/ Auswerteschaltung 6 nach dem Stand der Technik zu sehen. Im gezeigten Fall wird eine konstante Meßfrequenz *f_{M}* von 3 MHz verwendet. Da der Serienresonanzschwingkreis 7 über die Wahl der einzelnen Bauteile L, R sehr genau abgestimmt wird, ist es vorteilhaft, die Meßfrequenz *f_{M}* konstant zu halten.

Auffällig an dem Frequenzgang sind im Hinblick auf die Meßgenauigkeit der kapazitiven Sonde 4 zwei Punkte:
1. Die durch die Änderung der Meßkapazität *C_{M}* bedingte Änderung des Scheinstromes *I_{M}* ist sehr gering. Im Normalfall liegt sie bei einigen µA.
2. Der Meßstrom *I_{M}* steigt stetig mit steigender Meßfrequenz *f_{M}* an.

Der Nachteil von Punkt 1 liegt, wie bereits erwähnt darin, daß die Meßempfindlichkeit gering ist; klarer Nachteil von Punkt 2 ist, daß hochfrequente Störsignale die Empfindlichkeit der Messungen zusätzlich beeinträchtigen.

Fig. 4 zeigt eine graphische Darstellung des Frequenzverhaltens der Meß-/Auswerteschaltung 6 gemäß der erfindungsgemäßen Vorrichtung 1 bei gleicher Änderung der Meßkapazität *C_{M}*. Selbstverständlich wurde in beiden Fällen vergleichbare kapazitive Sonden 4 verwendet. Vergleicht man den in Fig. 4 gezeigten Frequenzgang mit dem in Fig. 3 dargestellten Verlauf so fällt ins Auge, daß mittels der erfindungsgemäß verwendeten Meß-/Auswerteschaltung 6 den beiden zuvor genannten Nachteilen der bekannten kapazitiven Sonden 4 effektiv entgegengewirkt wird.
1. Die Meßempfindlichkeit ist erheblich verbessert. Wie entsprechende Messungen bestätigen, ist die durch die Änderung der Meßkapazität *C_{M}* verursachte Änderung des Meßstromes *I_{M}* um ca. 60% größer als bei der in Fig. 3 gezeigten Sonde 4.
2. Der Meßstrom *I_{M}* steigt nicht stetig mit der Frequenz an, sondern fällt nach Erreichen eines Maximums wieder deutlich ab. Dies bedeutet, daß Störsignale im höheren Frequenzbereich unterdrückt werden. Folglich läßt sich mit der erfindungsgemäßen Vorrichtung das EMV-Verhalten gezielt verbessern.

### Bezugszeichenliste

- 1: erfindungsgemäße Vorrichtung
- 2: Behälter
- 3: Medium
- 4: Kapazitive Sonde
- 5: Verbindungsleitung
- 6: Meß-/Auswerteschaltung
- 7: Serienresonanzschwingkreis
- 8: Zweiter Kondensator
- 9: erster Anschluß
- 10: zweiter Anschluß
- 11: Knotenpunkt

## Patentansprüche

1. Vorrichtung zur Bestimmung des Füllstandes eines Mediums in einem Behälter mittels einer kapazitiven Sonde,
wobei eine Spannungsquelle vorgesehen ist, die die Sonde mit einer Meßfrequenz (*f_{M}*) beaufschlagt,
wobei eine Meß-/Auswerteschaltung (6) vorgesehen ist, die die Meßkapazität ermittelt und die zumindest eine Induktivität (L) aufweist, die mit der Meßkapazität (*C_{M}*) einen Serienresonanzschwingkreis (7) mit der Resonanzfrequenz (*f_{R}*) bildet,
wobei der Serienresonanzschwingkreis (7) derart abgestimmt ist, daß die Meßfrequenz (*f_{M}*) kleiner ist als die Resonanzfrequenz (*f_{R}*),
wobei ein Widerstand (R) vorgesehen ist, welcher der Induktivität (L) der Meß-/Auswerteschaltung (6) parallel geschaltet ist,
wobei der Widerstand (R) und die Eigenresonanz der Induktivität (L) so bemessen sind, daß Störfrequenzen weitgehend unterdrückt sind,
und
wobei die Meß-/Auswerteschaltung (6) die ermittelte Meßkapazität (*C_{M}*) mit einem vorgegebenen Kapazitätswert vergleicht und Information über den Füllstand des Mediums in dem Behälter bereitstellt.

2. Vorrichtung nach Anspruch 1,
**dadurch gekennzeichnet,**
**daß** es sich bei der Vorrichtung um einen Grenzstanddetektor (4) handelt.

3. Vorrichtung nach Anspruch 1 oder 2,
**dadurch gekennzeichnet,**
**daß** die Vorrichtung als Kompaktsensor ausgebildet ist.

4. Vorrichtung nach Anspruch 1,
**dadurch gekennzeichnet,**
**daß** zusätzlich zur Meßkapazität (*C_{M}*) ein zweiter Kondensator (8) mit der Kapazität (*C_{I}*) vorgesehen ist, dessen erster Anschluß (9) an dem Knotenpunkt (11), an dem die Meßkapazität (*C_{M}*) und die Induktivität (L) verbunden sind, angeschlossen ist und dessen zweiter Anschluß (10) auf Masse liegt.

5. Vorrichtung nach Anspruch 1,
**dadurch gekennzeichnet,**
**daß** die Induktivität (L) und die Kapazität (*C_{I}*) des zweiten Kondensators (8) so bemessen sind, daß Störfrequenzen weitgehend unterdrückt werden.

6. Vorrichtung nach Anspruch 1,
**dadurch gekennzeichnet,**
**daß** die Bedämpfung des Serienresonanzschwingkreises (7) durch den Widerstand (R) so gewählt ist, daß Toleranzen der Eigenresonanz der Induktivität (L) und/oder die Temperaturabhängigkeit der Induktivität (L) unterdrückt werden.

## Claims

1. Unit for determining the level of a medium in a container with a capacitance probe,
where a voltage source is provided which acts on the probe with a measuring frequency (*f_{M}*); where a measuring/evaluation circuit (6) is provided which determines the measuring capacitance and which has at least an inductance (L), which, with the measuring capacitance (*C_{M}*), forms a serial resonance oscillating circuit (7) with the resonance frequency (*f_{R}*); where the serial resonance oscillating circuit (7) is adjusted in such a way that the measuring frequency (*f_{M}*) is smaller than the resonance frequency (*f_{R}*);
where a resistor (R) is provided which is switched in parallel to the inductance (L) of the measuring/evaluation circuit (6);
where the resistor (R) and the natural resonance of the inductance (L) are designed in such a way that interference frequencies are largely suppressed;
and where the measuring/evaluation circuit (6) compares the measuring capacitance (*C_{M}*) determined to a prespecified capacitance value and makes Information available on the level of the medium in the container.

2. Unit as per Claim 1,
**characterized in that**
the unit is a level limit detector (4).

3. Unit as per Claim 1 or 2,
**characterized in that**
the unit is designed as a compact sensor.

4. Unit as per Claim 1,
**characterized in that**
in addition to the measuring capacitance (*C_{M}*) a second capacitor (8) is provided with the capacitance (*C_{I}*), the first terminal (9) of said capacitor being connected to the node point (11), to which the measuring capacitance (*C_{M}*) and the inductance (L) are connected, and the second terminal (10) of said capacitor being connected to ground.

5. Unit as per Claim 1,
**characterize in that**
the inductance (L) and the capacitance (*C_{I}*) of the second capacitor (8) are designed such that interference frequencies are largely suppressed.

6. Unit as per Claim 1,
**characterized in that**
the damping of the serial resonance oscillating circuit (7) by the resistor (R) is selected such that the tolerances of the natural resonance of the inductance (L) and/or the temperature dependency of the inductance (L) are suppressed.

## Revendications

1. Dispositif destiné à la détermination du niveau d'un produit dans un réservoir au moyen d'une sonde capacitive,
pour lequel est prévue une source de tension, qui alimente la sonde avec une fréquence de mesure (f_{M}),
pour lequel est prévu un circuit de mesure / d'exploitation (6), qui détermine la capacité de mesure et présente au minimum une inductance (L), qui forme avec la capacité de mesure (C_{M}) un circuit oscillant à résonance série (7) avec la fréquence de résonance (f_{R}),
le circuit oscillant à résonance série (7) étant accordé de telle manière que la fréquence de mesure (f_{M}) soit inférieure à la fréquence de résonance (f_{R}),
une résistance (R) étant prévue, laquelle est couplée en parallèle à l'inductance (L) du circuit de mesure / d'exploitation (6),
la résistance (R) et la résonance propre de l'inductance (L) étant dimensionnées de telle manière que les fréquences parasites soient largement atténuées,
et
le circuit de mesure / d'exploitation (6) comparant la capacité de mesure (C_{M}) déterminée avec une valeur de capacité prédéfinie et met à disposition l'information sur le niveau du produit dans le réservoir.

2. Dispositif selon la revendication 1,
**caractérisé en ce**
**que**, concernant le dispositif, il s'agit d'un détecteur de niveau limite (4).

3. Dispositif selon la revendication 1 ou 2,
**caractérisé en ce**
**que** le dispositif est conçu en tant que capteur compact.

4. Dispositif selon la revendication 1,
**caractérisé en ce**
**qu'**en plus de la capacité de mesure (C_{M}) est prévu un deuxième condensateur (8) avec la capacité (C_{I}), dont la première broche (9) est raccordée au point nodal (11), auquel la capacité de mesure (C_{M}) et l'inductance (L) sont reliées, et dont la deuxième broche (10) est reliée à la masse.

5. Dispositif selon la revendication 1,
**caractérisé en ce**
**que** l'inductance (L) et la capacité (C_{I}) du deuxième condensateur (8) sont dimensionnées de telle manière que les fréquences parasites soient largement atténuées.

6. Dispositif selon la revendication 1,
**caractérisé en ce**
**que** l'amortissement du circuit oscillant à résonance série (7) est sélectionnée par le biais de la résistance (R) de telle manière que les tolérances de la résonance propre de l'inductance (L) et/ou la dépendance de la température de l'inductance (L) soient atténuées.
